(19) Europäisches Patentamt
European Patent Office
Office européen des brevets

(11) **EP 1 947 434 A2**

(12) **EUROPEAN PATENT APPLICATION**

(43) Date of publication:
**23.07.2008 Bulletin 2008/30**

(51) Int Cl.:
**G01L 1/12** (2006.01)     **G01L 9/16** (2006.01)

(21) Application number: **07123909.9**

(22) Date of filing: **21.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.01.2007  US 653682**

(71) Applicant: **Delphi Technologies, Inc.**
**Troy, Michigan 48007 (US)**

(72) Inventors:
• **Lequesne, Bruno**
**Troy, MI 48084 (US)**
• **Taye, Elias**
**Macomb Twp, MI 48042 (US)**
• **Schroeder, Thaddeus**
**Rochester Hills, MI 48309 (US)**

(74) Representative: **Denton, Michael John et al**
**Delphi European Headquarters,**
**64 avenue de la Plaine de France,**
**Paris Nord II,**
**B.P. 65059, Tremblay en France**
**95972 Roissy Charles de Gaulle Cedex (FR)**

(54) **Magnetostrictive strain sensor**

(57)     The present invention is directed to a strain sensor comprising a monolithic magnetostrictive material core wherein the permeability of the material depends on stress, the core having an aperture therein and a coil wound about the core and through the aperture. The core and the coil being configured such that when the coil is connected in circuit, it establishes a loop of magnetic flux that circulates through the core and about the coil whereby impedance of the core is measured. Impedance being a general term including inductance, resistance and a combination of the two. Various configurations for the core are disclosed and integrated housing is also taught. The present sensor can be used to sense force, pressure, torque, acceleration and combinations thereof. The present device can be utilized to sense pressure of diesel fuel in diesel engines, oil pressure, hydraulic pressure, and earth moving and construction vehicles, etc. The sensor can be integrated in a threaded plug and is adaptable to be included in pipe made of magnetostrictive material. A method is also taught in the present application.

FIG.3

**Description**

TECHNICAL FIELD

The present invention relates to a magnetostrictive strain sensor with an airgapless core.

BACKGROUND OF THE INVENTION

Magnetostrictive strain sensors are known and examples are disclosed and claimed in U.S. Patent Nos. 6,941,824, issued September 13, 2005, and 6,993,983 issued February 7, 2006, both assigned to the assignee of the subject invention. An inductance coil extends around an axis for establishing a loop of magnetic flux looping axially through the core and extending around the coil to define a donut shaped ring of magnetic flux surrounding the coil. A core made of a magnetostrictive material, such as a Nickel-Iron alloy, provides a primary path for the magnetic flux in a first portion of the loop of magnetic flux. A magnetic carrier provides a return path for the magnetic flux in a second portion of the loop of magnetic flux as the magnetic flux circles the coil through the core and the carrier. The permeability of the magnetostrictive core, thus the inductance of such a device, is a function of the strain applied to the core along the axis. The coil inductance therefore provides a useful signal.

The coil can be excited with an AC voltage or AC current to induce an alternating magnetic field in the core. This field loops around the coil, and will possibly travel through other elements and materials, such as airgaps, and other matter.

Magnetostrictive sensor concepts are described in Publication US 2006/0150743 A1, published July 13, 2006, US Patent No. 7,104,137, issued September 12, 2006, and Publication U.S. 2006/0086191, published April 27, 2006.

Magnetostrictive materials have a permeability that varies with stress (Villari effect). Usually, stress is sensed by measuring the inductance of a coil (usually of a copper wire) wound around a core made of a magnetostrictive material such as a nickel-iron alloy. These conventional sensors have at least 2 parts, a coil and a core. The core is made of at least two parts, so that the coil can be both wound around the inner part of the core, and surrounded by the outer part of the core.

The inductance depends not only on the permeability of the core material(s), but also on any airgaps between the various parts of the core. The airgaps are problematic because the relative permeability of air ($\mu_O = 1$) is orders of magnitude smaller than the permeability of likely core materials, so the reluctance of the airgaps is large compared to that of the core even if the airgap is small, even as small as a fraction of a millimeter. This invention overcomes this problem by using a seamless, one-piece core.

US Patent Nos. 4,541,288 and 4,561,314 show a coil wound around a toroidal core made of amorphous material, a type of material that exhibits magnetoelasticity. Despite a superficial resemblance (magnetoelasticity, toroidal core), there are fundamental differences between these patents and the present invention. These patents use a different aspect of the magnetoelastic effect, where the saturation flux density of a material is affected by stress (see Fig. 1a in US Patent No. 4,561,314). Applicants teach materials with a permeability that depends on stress. In the present design, the inductance of the coil is measured, and, because inductance is affected by airgaps, airgap elimination is more than an advantage, it is a practical necessity. When saturation flux density is used as a sensing principle, electronic circuits such as the one described in U.S. Patent No. 4,541,288 are used. Airgaps or the absence thereof are not as critical. The amorphous material used in these patents cannot be manufactured in bulk, and is available only in ribbon form. Given the typical thinness of these ribbons, it would not be practical to use a single ribbon to form the core. Several ribbons must be stacked together to form the core. Therefore, the core is not a single-piece core. The toroidal shape of the design in these patents is a convenient way to accommodate a stack of ribbons. The reference is not motivated by a need to eliminate airgaps.

The present invention overcomes deficiencies found in the prior art by measuring the inductance of a coil for a strain sensor comprising a monolithic magnetostrictive material core while essentially eliminating the effect of airgaps upon inductance.

SUMMARY OF THE INVENTION

This invention relates to a strain sensor comprising a monolithic magnetostrictive material airgapless core, wherein permeability of the material depends on stress; the core having an aperture therein; and a coil, wound about the core and through the aperture; the core and the coil being configured such that when the coil is connected in circuit, it establishes a loop of magnetic flux that circulates through the core and about the coil, whereby impedance of the core is measured.

The invention further relates to a strain sensor comprising a monolithic magnetostrictive material airgapless core, wherein permeability of the material depends on stress; the core having a groove therein; and a coil, wound about the core and through the groove; the core and the coil being configured such that when the coil is connected in circuit, it establishes a loop of magnetic flux that circulates through the core and about the coil, whereby impedance of the core is measured.

The invention also relates to the above strain sensor integrated in a sensor plug useful for sensing the pressure of diesel fuel in common rail diesel engine systems, oil pressure in engine oil systems, oil pressure in hydraulic actuators for backhoes and other earth moving and construction vehicles.

The invention further relates to a method for measuring stress utilizing the mentioned strain sensor in which impedance of the core is measured in the substantial absence of the effect of airgaps between coil and core upon impedance.

BRIEF DESCRIPTION OF THE DRAWINGS

Other advantages of the present invention will be readily appreciated, as the same becomes better understood by reference to the following non-limiting detail description when considered in conjunction with the accompanying drawings wherein:

**Fig. 1** is a cross sectional view of a prior art magnetostrictive force sensor;

**Fig. 2** is a cross sectional view of a monolithic magnetic core according to the present invention;

**Fig. 3** is a rectangular monolithic core according to the present invention;

**Fig. 4** is a cross sectional view according to the present invention and Figures 4A and 4B are cross sectional views of Fig. 4 taken along line AA, Figure 4A shows a hollow cylinder, while Figure 4B is not hollow;

**Fig. 5** is a cylindrical horizontal monolithic core according to the subject invention;

**Fig. 6** is a toroidal monolithic core and Figure 6A is a cross sectional view taken along line AA;

**Fig. 7** shows multiple coils on a monolithic core according to the subject invention;

**Fig. 8** shows multiple coils each wound around multiple apertures in a monolithic core according to the present invention;

**Fig. 9** is a schematic representation of a pressure sensor plug utilizing a strain sensor according to the present invention;

**Figs. 10A** and **10B** show a front view and a side view, respectively, of a strain sensor according to the present invention integrated into a system being measured; and

**Fig. 11** shows a cross sectional view of a strain sensor according to the present invention integrated into a conduit of magnetostrictive material.

DESCRIPTION OF THE PREFERRED EMBODIMENT

Magnetostriction denotes the following physical effect: The change in the dimension of a body when it is magnetized. More specifically, Joule magnetostriction is the change in the length of a body when it is magnetized. Joule magnetostriction can be positive (the change in length with field is positive), or negative (the change in length with field is negative), depending on the material.

The inverse effect, called inverse magnetostriction or Villari effect, is the change in permeability of a magnetic material with an applied stress.

Materials which exhibit a magnetostrictive effect, especially those exhibiting a large magnetostrictive effect, are called magnetostrictive materials.

A magnetostrictive stress sensor (such as the one described in our invention) therefore uses the Villari effect on magnetostriction, and Villari effect are often overlooked and all are denoted "magnetostrictive devices." Reference: Bozorth, R. M., Wiley-Interscience, IEEE Press Reissue, 1993.

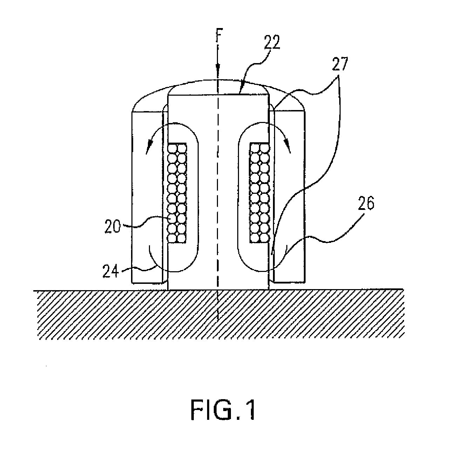

A typical strain sensor is shown in Fig. 1. In this example the source of stress is a force applied vertically on a core 22 made of a magnetostrictive material. Other typical sources of stress are pressure, torque, and acceleration. In Fig. 1, the coil is wound around the core. An outside member serves as a carrier 24 for the flux return, and is placed around the coil to close the magnetic flux path 26. In background art, the core and carrier are distinct so that the coil 20 can be easily wound. In this construction, there are necessarily interfaces between the core and carrier, which will constitute airgaps 27.

The type of magnetostrictive material used in the present sensors has a permeability that depends on stress. Examples of such materials are nickel-iron alloys (both maraging steels, with lower nickel content, around 18%, and regular nickel-iron alloys, with nickel content between 20% and 100%), galfenol, terfenol, etc. So the changing permeability can be sensed by measuring the inductance of the coil for instance by exciting the coil with a small, constant amplitude current and reading the voltage across the coil.

More particularly, in an example of useful magnetostrictive materials are: Nickel-iron alloys (alloys with more than 20% nickel content), maraging steels (nickel alloys with less than 20% nickel), cobalt-iron alloys, Terfenol, or galliumiron alloys (known as Galfenol), especially for sensors used in compression mode; pure nickel alloy with a large percentage of nickel, especially for sensors used in tension mode.

The most useful materials are nickel-iron alloys in general, and maraging steels for those instances where the stress level is particularly high. Galfenol is a new and promising material. Steels in general exhibit some magnetostriction but much smaller.

The reasons to reduce or eliminate all airgaps are developed in details in US Patent Application Publication 2006/0150743 A1. Because the relative permeability of air is one and that of the core and return-flux carrier are 100 or more, even a small airgap (fraction of a millimeter) contributes to the inductance of the coil, therefore lowering useful signal. Moreover, if the airgap changes from about 0.1 to 0.2 mm, then a significant change in inductance is observed that may be at least as large as the inductance change resulting from the stress in the core. In other words, the airgaps can be a source of noise which hide the useful sensor signal. Reduction and elimination of airgaps must be devised.

In '743 publication, a solution is suggested whereby the interfaces between the various constituting parts of the core are placed normal to the applied force. The idea is that, with proper machining the airgap can be reduced initially, and the force when applied will tend to further close the airgap, thus guaranteeing that it is always close. While this approach has been successful, it still relies on matched surfaces for good contact, and this good contact must be maintained over time, temperature fluctuation, etc.

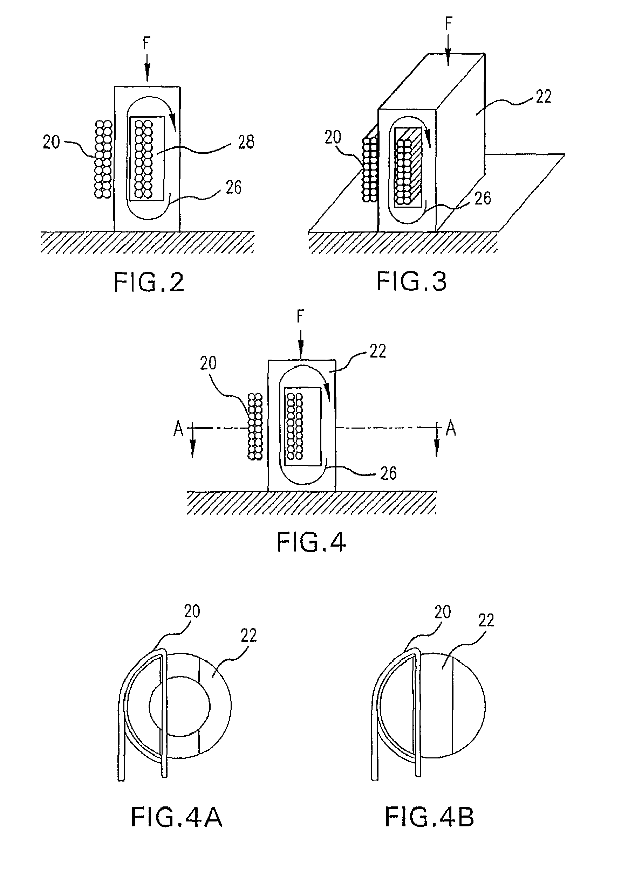

The present invention overcomes this difficulty using a single-piece core 22, and winding a coil 20 through an aperture 28, as shown in Fig. 2.

Monolithic means made of a single, solid piece can be machined down from a larger piece, or molded into shape, from a single mold. Includes no airgap, separating film, or mating surface within, in any plane, whether in the direction parallel to the magnetic flux, normal to the magnetic flux, etc.

Some processes such as welding two separate parts together will yield a piece which has the appearance of being monolithic. However, the welding process cannot be guaranteed to leave no separating airgap, or separating film of welding material within, therefore it cannot product a monolithic piece.

Variations in coil shape

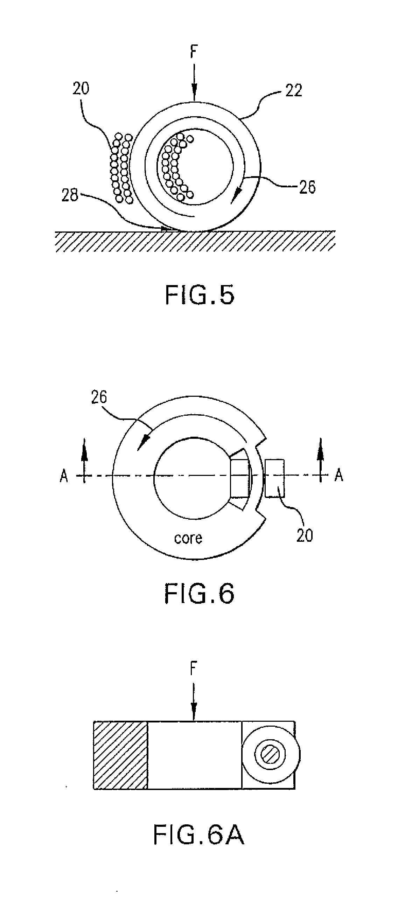

The monolithic core can be implemented in various geometries. Various examples are shown in the drawings, all in the context of force sensing. Fig. 3 shows a rectangular or parallel-piped core 22. Other core configurations are shown in Fig. 4 (cylindrical), Fig. 5 (cylindrical in a horizontal plane), and Fig. 6 (toroidal). The configuration in Fig. 5 is a cylinder that may include a flat area 28 at the bottom, which is illustrated, and/or one flat area on top, which is not shown, for stability of the core.

In Figs. 3-6, part of the magnetic flux path is in line with the stress in the material (here generally in the direction of the force), while other parts are normal to the stress. Those skilled in the art know how to align flux and stress lines to produce a change in permeability in a magnetostrictive material. For example, a design can take advantage of the type of magnetostriction of the material used in the fabrication of the sensor. This is because the magnetostrictive effect is strong when the magnetic flux lines are aligned with, or normal with, the stress, depending on whether it is a compressive or a tensile stress, and depending on the material. As explained here, two designs are possible: with some materials (with a negative magnetostriction coefficient), the conductor width should be larger than its height; and, the opposite for other materials (with a positive magnetostriction coefficient).

Generally, depending on the material, magnetostriction has either a positive or negative coefficient. The coefficient of magnetostriction which exhibits a positive or negative sign is the ratio of change of permeability for a given change in stress applied, or coefficient $\lambda$ :

$$\lambda = \frac{\Delta\mu}{\Delta\sigma}$$

where $\mu$ and $\sigma$ are the material permeability and applied stress, respectively. See R. M. Bozorth, Ferromagnetism, IEEE Press, Wiley-Interscience, John Wiley & Sons, Inc., 3rd Ed. (2003).

Materials with a negative coefficient of magnetostriction when used in compression must have the flux lines generally aligned with the stress, as summarized in Table I. For materials with a positive coefficient of magnetostriction, when in compression, the magnetic flux lines are desirability normal to the stress lines, see Table II. Tables I and II also show tensile stress, for completeness.

Table I: Conditions for materials with a negative magnetostriction coefficient

| Materials with a negative magnetostriction coefficient | Stress in line with flux | Stress normal to flux |
|---|---|---|
| Tensile stress | Very small change in permeability | Large change in permeability |
| Compression stress | Large change in permeability | Very small change in permeability |

Table II: Conditions for materials with a positive magnetostriction coefficient

| Materials with a positive magnetostriction coefficient | Stress in line with flux | Stress normal to flux |
|---|---|---|
| Tensile stress | Large change in permeability | Very small change in permeability |
| Compression stress | Very small change in permeability | Large change in permeability |

Now, looking at desirable magnetostrictive materials: A desirable type of material is a nickel-iron alloy, because it exhibits a large coefficient $\lambda$, and is relatively strong and inexpensive. Nickel-iron alloys, however, can exhibit either a positive or negative coefficient of magnetostriction, depending on the nickel content of the alloy. R. J. Bozorth, p. 616.

So, for force sensors where the stress is compressive, and for nickel-iron alloys with nickel content between 40% and 70%, the magnetic flux lines must be in line with the stress lines. For nickel-iron alloys with nickel content between 85% and 95%, the flux lines must be normal to the stress.

Thus, those skilled in the art know how this relationship depends on the material (some have positive, other negative, magnetostrictive coefficients), and depends on whether the stress is compressive or tensile. Therefore, they will know which part of the core should be longer. In Fig. 3, for instance, the portion of the core 22 where flux and stress are in line is longer than the portion where they are normal to each other.

For the toroidal shape, the coil 20 must be recessed, as shown on Fig. 6, or the force applied only to part of the toroidal, so that the force does not bear on the coil.

Variations in coil design:

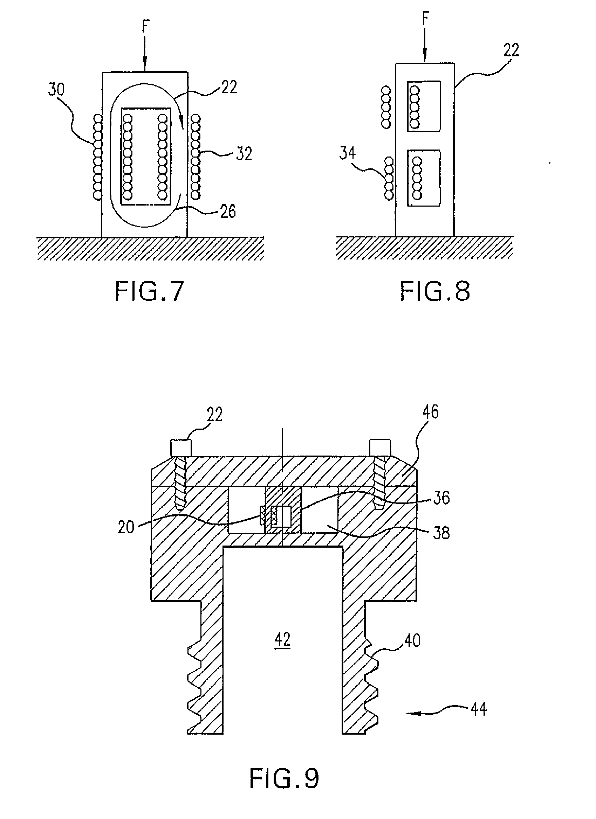

The sensing unit may include more than one coil. Having several coils 30, 32 can be useful for redundancy, to cancel EMI noise, or for cancellation of disturbances such as temperature. Another coil may be wound on the same core 22, see Fig. 7. If several coils are used, they may be wound through different holes, see Fig. 8; importantly, however, each coil is wound around a single-piece core 22.

Various applications:

Stress can be caused by force, pressure, torque, acceleration, etc., so the sensor concept described here can be applied to sense force, pressure, torque, acceleration, combinations thereof, etc. The subject figures concern force sensor applications. An example of a pressure sensor application is shown in Fig. 9. A fluid 42 under pressure circulates in a pipe or hydraulic circuit (now shown). The sensor 36 according to the invention is placed within an assembly, generally looking in the case of Fig. 9 like a plug 44, which can be threaded into the pipe or hydraulic circuit. The plug has a cavity for the fluid at one end (the threaded end) 40 and a blind hole 38 for the sensing unit 36 at the other end. The blind hole 38 is separated from the fluid cavity by a wall 39 having sufficient thickness to be sturdy, but sufficiently thin to transfer stress to the sensor unit. 1 or 2 mm is considered appropriate.

Wall 39 is different from the diaphragms used in other pressure sensors such as strain gauge sensors. Strain gauge pressure sensors are known and commercially available, see for instance US Patent 7,131,334. In strain gauge sensors, a diaphragm is used, like wall 39, to isolate the pressurized fluid from the attached strain gauge, which serves as the sensing element. However, unlike wall 39, a diaphragm must be sufficiently flexible and deformable to apply stress to the strain gauge. Wall 39 does not deform. The force exerted on wall 39 by the pressure is directly transmitted to the sensor core 22.

The sensing unit consists of a single-piece core 22 with a hole through which the coil(s) is wound. Fig. 9 shows an example of a rectangular (like Fig. 3) or cylindrical (like Fig. 4) core. Finally, the blind hole is closed with a cover 46 that ensures a tight fit for the sensing unit within.

This example is useful for sensing the pressure of diesel fuel in common rail diesel engine systems, oil pressure in engine oil systems, oil pressure in hydraulic actuators for back hoes and other earth moving and construction vehicles, etc.

Sensor integration:

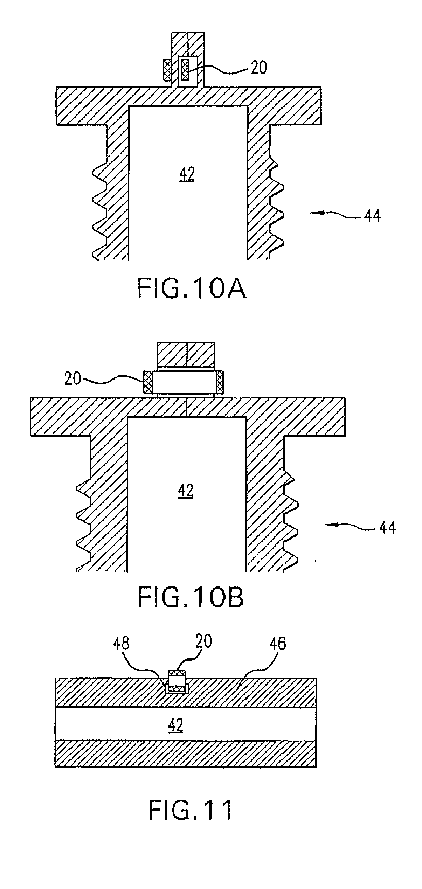

The single-piece core system presented here offers a unique opportunity to integrate the sensor 36 physically with the system where it is used. For instance, the pressure sensor 36 shown in Fig. 9 consists of 3 parts: the plug 44 with a cavity and a blind hole 38, the sensor unit (core 22 and coil 20) and the cover 46. The sensor could be made in one piece as shown in Fig. 10. In this case, the wall separating the fluid from the sensing coil constitutes a portion of the core.

Provided the material of the pipe 46 or system being monitored for pressure is sufficiently magnetostrictive, the present concept can be implemented by a single step of making one through hole 48 close to the area the pressure of which is monitored, and winding a coil 20 through that hole 48. An example is shown in Fig. 11. In this case, the wall separating the fluid from the sensing coil is both a part of the pipe, and at the same time constitutes a portion of the core.

This invention concerns development of a pressure sensor for withstanding higher pressures. Examples are common rail diesel fuel sensors, and combustion chamber pressure sensors (gasoline or diesel). In these applications, aside from the single-piece core, a distinctive feature is the blind hole 38 in which the sensor 36 is fitted (see Fig. 9), or the single piece integration of the core 22 with the overall mechanical part itself (Fig. 10). The configuration of Fig. 10 is simpler to manufacture and is a practical design. Concerning the sensor body itself, the cylindrical configuration of Fig. 4 (hollow, alternative 4A) is desirable because it is axisymmetric (except for the hole for the coil), axisymmetric like the fuel cavity underneath, and therefore, like the stress pattern. Being hollow the cylinder further concentrates stress in a thin portion of the core where the flux is also flowing. So the walls of the cylinder will see uniform, relatively high levels of stress.

The outside diameter of the cylinder of Fig. 4, and the wall thickness, will be selected by considering the following strategy. About the wall thickness, because of skin effects, the magnetic flux is limited to a depth of only a portion of a millimeter, so a thinner wall is desirable. A thicker wall would see proportionally less stress. About diameter, a large diameter encompasses more stress ($\pi$ x wall thickness x diameter); however, the stress level is maximum in the center of the device, therefore, a large diameter sees a lower level of stress. A trade-off is therefore necessary. In an exemplary design with diesel fuel at 2,000 bars, a wall thickness of 0.5 mm, and an outside diameter of 4.8 mm, can be used. The hole is approximately square, 2mm x 2 mm.

To handle higher pressures, maraging steel is used as a material combining both strength and magnetostriction.

For common materials, frequencies as low as 100 Hz are sufficient. Desirable values of frequencies can be either in the ranges 1 to 15 kHz or 15 to 50 kHz. Both of these ranges would provide adequate sensor dynamic response, and allow the force sensor to follow fast motion. For example, the force pattern experienced during the motion of a vehicle brake system, if the sensor is part of such a system. The lower range (1 to 15 kHz) has the advantage of avoiding the range of frequencies usually selected for motor control, thus minimizing interference if the sensor is close to a motor. The higher range (15 to 50 kHz) has the advantage of being inaudible for humans. It would also allow for yet higher dynamic response.

A sensor assembly for measuring force along an axis in accordance with the subject invention is shown in various embodiments in figures wherein like parts or portions are indicated with like numerals.

At least one inductance coil having multiple turns or coils, or multiple coils each having one or more turns or coils, extends around the force axis for establishing a loop of magnetic flux (shown by the arrows) looping axially through the coil and extending around the axis to define a ring of magnetic flux surrounding the coil. In the exemplary embodiments, only one coil is shown, and the self-inductance of the coil is calculated and measured. Alternative embodiments may include several coils, either connected in series or separately, and "inductance" should be understood as, more generally, self-inductance or mutual inductance.

In the exemplary figures shown in this application, the force axis happens to coincide with a geometrical axis of symmetry. However, the word "force axis" should be understood broadly as the direction of the force, or the direction of the force path, through the core. In fact, the force axis or force path may, or may not be an axis of symmetry; it may, or may not be, a line, and one could envision situations where this path or axis is not straight but curved. It could also be a surface rather than a line.

Obviously, many modifications and variations of the present invention are possible in light of the above teachings. The invention may be practiced otherwise than as specifically described within the scope of the appended claims. In addition, the reference numerals in the claims are merely for convenience and are not to be read in any way as limiting. The foregoing references are hereby incorporated by reference.

**Claims**

1. A strain sensor, comprising:

a monolithic magnetostrictive material airgapless core wherein permeability of the material depends on stress, the core having an aperture therein; and a coil, wound about the core and through the aperture; the core and coil being configured such that when the coil is connected in circuit, it establishes a loop of magnetic flux that circulates through the core and about the coil, whereby impedance of the coil is measured.

2. A strain sensor according to claim 1, wherein the core is a substantially rectangular solid and the aperture is substantially rectangular.

3. A strain sensor according to claim 1, wherein the core has a doughnut shape.

4. A strain sensor according to claim 1, wherein the core is a solid having more than one aperture therein and a coil is wound about the core through each aperture.

5. A strain sensor according to claim 1, wherein the core has a substantially cylindrical shape.

6. A strain sensor according to claim 5, where the coil is wound generally along the axis of the cylinder.

7. A strain sensor according to claim 5, where the coil is wound in a direction generally normal to the axis of the cylinder.

8. A strain sensor according to claim 1, wherein the core has a substantially toroidal shape.

9. A strain sensor according to claim 8, wherein the coil is located in a recess of the core.

10. A strain sensor according to claim 1, wherein the coil of the strain sensor is separated from a fluid by a wall.

11. A strain sensor according to claim 10, wherein the strain in the sensor is the result of pressure in said fluid, and wherein the coil impedance measurement is a measurement of pressure in the fluid.

12. A strain sensor according to claim 11, wherein the strain sensor is located in a cavity of a sensor assembly.

13. A strain sensor according to claim 10, wherein the core is a substantially rectangular solid and the aperture is substantially rectangular.

14. A strain sensor according to claim 10, wherein the core has a doughnut shape.

15. A strain sensor according to claim 10, wherein the core is a solid having more than one aperture therein and a coil is wound about the core through each aperture.

16. A strain sensor according to claim 10, wherein the core has a substantially cylindrical shape.

17. A strain sensor according to claim 10, where the coil is wound generally along the axis of the cylinder.

18. A strain sensor according to claim 10, where the coil is wound in a direction generally normal to the axis of the cylinder.

19. A strain sensor according to claim 1, wherein the core has a substantially toroidal shape.

20. A strain sensor according to claim 19, wherein the coil is located in a recess of the core.

21. A strain sensor according to claim 11, wherein the strain sensor is integral with a sensor assembly, a portion of the core of said strain sensor forming the wall separating the coil from the fluid.

22. A strain sensor according to claim 11, wherein the strain sensor is integral with a magnetostrictive conduit, the magnetostrictive conduit is a conduit for the fluid, a portion of the core of said strain sensor forming the wall separating the coil from the fluid.

23. A strain sensor comprising:

a monolithic magnetostrictive material airgapless core wherein permeability of the material depends on stress, the core having a groove therein; and a coil, wound about the core and through the groove; the core and coil being configured such that when the coil is connected in circuit, it establishes a loop of magnetic flux that circulates through the core and about the coil.

24. A method of measuring a force applied to an object comprising:

mounting a magnetostrictive element on at least a portion of the object wherein the magnetostrictive element is subjected to a prestress force and a conductive coil is wound around at least a portion of the magnetostrictive element to form an airgapless core; exciting the conductive coil; and detecting changing permeability by measuring impedance of the coil to thereby determine stress.

FIG.1

FIG.2

FIG.3

FIG.4

FIG.4A

FIG.4B

FIG.5

FIG.6

FIG.6A

FIG.7

FIG.8

FIG.9

FIG.10A

FIG.10B

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6941824 B
- US 6993983 B
- US 20060150743 A1
- US 7104137 B
- US 20060086191 A
- US 4541288 A
- US 4561314 A
- US 7131334 B

### Non-patent literature cited in the description

- magnetostrictive devices. **BOZORTH, R. M.** IEEE Press Reissue. Wiley-Interscience, 1993
- **R. M. BOZORTH.** Ferromagnetism. IEEE Press, Wiley-Interscience, John Wiley & Sons, Inc, 2003